# EUROPEAN PATENT APPLICATION

(11) **EP 4 422 125 A1**
(43) Date of publication of application: **28.08.2024**
(21) Application number: 22889219.6
(22) Date of filing: 31.10.2022
(51) Int. Cl.: H04L 9/32, G06F 9/455

(54) **COMMUNICATION METHOD AND APPARATUS**

(30) Priority: 05.11.2021 CN 202111303494
(71) Applicant: Huawei Technologies Co., Ltd., Shenzhen, Guangdong 518129 (CN)
(72) Inventor: XIA, Haitao, Shenzhen, Guangdong 518129 (CN)
(74) Representative: Gill Jennings & Every LLP
(86) International application number: PCT/CN2022/128497
(87) International publication number: WO 2023/078194

(57) **Abstract**

Embodiments of this application provide a communication method and an apparatus. The method includes: A container cluster management CCM receives a first request message from a network device, where the first request is used to request the CCM to associate a target customized container cluster management characteristic with a target container cluster, the first request message includes identification information of the target customized container cluster management characteristic and identification information of the target container cluster, and the network device is a consumer entity of the CCM; and the CCM associates the target customized container cluster management characteristic with the target container cluster based on the first request message. According to solutions in this application, dynamic deployment of a container cluster management characteristic can be implemented, so that carriers' requirements can be better met. In addition, in the solutions for implementing the dynamic deployment of the container cluster management characteristic provided in this application, interaction between the CCM and a CISM does not need to be performed, so that an increase in integration costs of interoperation between functions of a container platform layer in a multi-vendor environment can be avoided.

## Description

This application claims priority to Chinese Patent Application No. 202111303494.7, filed with the China National Intellectual Property Administration on November 5, 2021 and entitled "COMMUNICATION METHOD AND APPARATUS", which is incorporated herein by reference in its entirety.

### TECHNICAL FIELD

Embodiments of this application relate to the field of communication technologies, and in particular, to a communication method and an apparatus.

### BACKGROUND

Currently, a container cluster management characteristic is deployed in a container cluster in a static configuration manner. For example, in a process of creating a container cluster, a predefined container cluster management characteristic may be added to the container cluster, and in a process of deleting a container cluster, a container cluster management characteristic used by the container cluster is deleted accordingly, so that tight coupling between the container cluster management characteristic and the container cluster is implemented. However, deploying the container cluster management characteristic in the static configuration manner cannot meet carriers' requirements, especially in a scenario in which a container cluster is applied to a multi-tenant management environment. Carriers urgently expect a method for dynamically deploying the container cluster management characteristic in a container cluster depending on carriers' operation management requirements. Therefore, how to implement dynamic deployment of the container cluster management characteristic is an urgent problem to be resolved.

### SUMMARY

Embodiments of this application provide a communication method and an apparatus, to implement dynamic deployment of a container cluster management characteristic.

According to a first aspect, a communication method is provided. The method includes the following.

A container cluster management CCM receives a first request message from a network device, where the first request message is used to request the CCM to associate a target customized container cluster management characteristic with a target container cluster, the first request message includes identification information of the target customized container cluster management characteristic and identification information of the target container cluster, and the network device is a consumer entity of the CCM; and the CCM associates the target customized container cluster management characteristic with the target container cluster based on the first request message.

In a possible implementation, the network device is a network functions virtualization orchestrator NFVO.

According to the solution of this application, the CCM can receive the first request message from the NFVO, and associate the target customized container cluster management characteristic with the target container cluster based on the first request message. In this way, dynamic deployment of the container cluster management characteristic is implemented, and carriers' requirements are better met. In addition, in the solution for implementing the dynamic deployment of the container cluster management characteristic provided in this application, interaction between the CCM and a CISM does not need to be performed, so that an increase in multi-vendor environment integration costs of interoperation between functions of a container platform layer can be avoided.

With reference to the first aspect, in some implementations of the first aspect, the first request message further includes application scope information of the association operation; and the application scope information of the association operation indicates that the target customized container cluster management characteristic is applied to all namespaces in the target container cluster; or the application scope information of the association operation indicates that the target customized container cluster management characteristic is applied to some namespaces in the target container cluster, and the first request message further includes identification information of the some namespaces.

With reference to the first aspect, in some implementations of the first aspect, the first request message further includes information about a consumer that is in the target container cluster and that uses the target customized container cluster management characteristic, and the consumer that uses the target customized container cluster management characteristic is a control plane functional entity and/or a user plane functional entity.

With reference to the first aspect, in some implementations of the first aspect, the method further includes the following.

The CCM sends a first response message to the network device, where the first response message indicates that the target customized container cluster management characteristic is successfully associated with the target container cluster.

With reference to the first aspect, in some implementations of the first aspect, before that a CCM receives a first request message from a network device, the method further includes the following.

The CCM receives a second request message from the network device, where the second request is used to request the CCM to load an object file, the second request message includes specific information, and the specific information is for determining the object file, and the object file includes configuration, status, and policy information for deploying and running the target customized container cluster management characteristic; the CCM determines the object file based on the second request message, and verifies whether the object file is able to be loaded; the CCM loads the object file when the object file is able to be loaded; and the CCM sends a second response message to the network device, where the second response message indicates that the CCM successfully loads the object file.

With reference to the first aspect, in some implementations of the first aspect, the object file is a managed container cluster object declarative descriptor MDD file; and the specific information includes identification information of the object file and/or storage path information of the object file.

With reference to the first aspect, in some implementations of the first aspect, after that the CCM loads the object file, the method further includes the following.

The CCM receives a third request message from the network device, where the third request is used to request the CCM to create the target customized container cluster management characteristic, and the third request message includes the specific information; the CCM determines the object file based on the third request message; the CCM creates a target object instance based on deployment information in the object file, where the target object instance corresponds to the target customized container cluster management characteristic; and the CCM sends a third response message to the network device, where the third response message indicates that the CCM successfully creates the target customized container cluster management characteristic, and the third response message includes identification information of the target object instance.

With reference to the first aspect, in some implementations of the first aspect, after that the CCM associates the target customized container cluster management characteristic with the target container cluster, the method further includes the following.

The CCM receives a fourth request message from the network device, where the fourth request is used to request to disassociate the target customized container cluster management characteristic from the target container cluster, and the fourth request message includes the identification information of the target customized container cluster management characteristic and the identification information of the target container cluster; the CCM disassociates the target customized container cluster management characteristic from the target container cluster based on the fourth request message; and the CCM sends a fourth response message to the network device, where the fourth response message indicates that the CCM successfully disassociates the target customized container cluster management characteristic from the target container cluster.

According to the solution of this application, the CCM can receive the fourth request message from the NFVO, and complete disassociation between the target customized container cluster management characteristic and the target container cluster based on the fourth request message. In this way, the customized container cluster management characteristic can be dynamically removed from a container cluster without deleting the container cluster, and carriers' requirements are better met.

According to the solution of this application, the CCM can receive the fourth request message from the NFVO, and complete the disassociation between the target customized container cluster management characteristic and the target container cluster based on the fourth request message. In comparison, in the solution of this application, the customized container cluster management characteristic can be dynamically disassociated from the container cluster without a deletion process of the container cluster, so that carriers' changing requirement are better met.

With reference to the first aspect, in some implementations of the first aspect, after the CCM disassociates the target customized container cluster management characteristic from the target container cluster, the method further includes the following.

The CCM receives a fifth request message from the network device, where the fifth request is used to request to delete the target customized container cluster management characteristic, where the fifth request message includes the identification information of the target customized container cluster management characteristic; the CCM deletes the target customized container cluster management characteristic based on the fifth request message; and the CCM sends a fifth response message to the network device, where the fifth response message indicates that the CCM successfully deletes the target customized container cluster management characteristic.

According to a second aspect, a communication method is provided. The method includes the following.

A network device determines to associate a target customized container cluster management characteristic with a target container cluster; and the network device sends a first request message to a container cluster management CCM, where the first request is used to request the CCM to associate the target customized container cluster management characteristic with the target container cluster, and the first request message includes identification information of the target customized container cluster management characteristic and identification information of the target container cluster, where the network device is a consumer entity of the CCM.

In a possible implementation, the network device is a network functions virtualization orchestrator NFVO.

According to the solution of this application, the NFVO can determine that the target customized container cluster management characteristic needs to be associated with the target container cluster. Further, the NFVO sends the first request message to the CCM. In this way, the CCM associates the target customized container cluster management characteristic with the target container cluster based on the first request message, so that dynamic deployment of the container cluster management characteristic is implemented, and carriers' requirements are better met. In addition, in the solution for implementing the dynamic deployment of the container cluster management characteristic provided in this application, interaction between the CCM and a CISM does not need to be performed, so that an increase in multi-vendor environment integration costs of interoperation between functions of a container platform layer can be avoided.

With reference to the second aspect, in some implementations of the second aspect, the first request message further includes application scope information of the association operation; and the application scope information of the association operation indicates that the target customized container cluster management characteristic is applied to all namespaces in the target container cluster; or the application scope information of the association operation indicates that the target customized container cluster management characteristic is applied to some namespaces in the target container cluster, and the first request message further includes identification information of the some namespaces.

With reference to the second aspect, in some implementations of the second aspect, the first request message further includes information about a consumer that is in the target container cluster and that uses the target customized container cluster management characteristic, and the consumer that uses the target customized container cluster management characteristic is a control plane functional entity and/or a user plane functional entity.

With reference to the second aspect, in some implementations of the second aspect, the method further includes the following.

The network device receives a first response message from the CCM, where the first response message indicates that the target customized container cluster management characteristic is successfully associated with the target container cluster.

With reference to the second aspect, in some implementations of the second aspect, the method further includes the following.

The network device determines an object file, where the object file includes configuration, status, and policy information for deploying and running the target customized container cluster management characteristic; the network device sends a second request message to the CCM, where the second request is used to request the CCM to load the object file, the second request message includes specific information, and the specific information is for determining the object file; and the network device receives a second response message from the CCM, where the second response message indicates that the CCM successfully loads the object file.

With reference to the second aspect, in some implementations of the second aspect, the object file is a managed container cluster object declarative descriptor MDD file, and the specific information includes identification information of the object file and/or storage path information of the object file.

With reference to the second aspect, in some implementations of the second aspect, the method further includes the following.

The network device determines to create the target customized container cluster management characteristic; the network device sends a third request message to the CCM, where the third request is used to request the CCM to create the target customized container cluster management characteristic, and the third request message includes the specific information; and the network device receives a third response message from the CCM, where the third response message indicates that the CCM successfully creates the target customized container cluster management characteristic, the third response message includes identification information of the target object instance, and the target object instance corresponds to the target customized container cluster management characteristic.

With reference to the second aspect, in some implementations of the second aspect, the method further includes the following.

The network device determines to disassociate the target customized container cluster management characteristic from the target container cluster; the network device sends a fourth request message to the CCM, where the fourth request is used to request to disassociate the target customized container cluster management characteristic from the target container cluster, and the fourth request message includes the identification information of the target customized container cluster management characteristic and the identification information of the target container cluster; and the network device receives a fourth response message from the CCM, where the fourth response message indicates that the CCM successfully disassociates the target customized container cluster management characteristic from the target container cluster.

According to the solution of this application, when the target customized container cluster management characteristic needs to be disassociated from the target container cluster, the NFVO may send the fourth request message to the CCM, so that the CCM completes disassociation between the target customized container cluster management characteristic and the target container cluster based on the fourth request message. In this way, the customized container cluster management characteristic can be dynamically removed from a container cluster without deleting the container cluster, and carriers' requirements are better met.

With reference to the second aspect, in some implementations of the second aspect, the method further includes the following.

The network device determines to delete the target customized container cluster management characteristic; the network device sends a fifth request message to the CCM, where the fifth request is used to request to delete the target customized container cluster management characteristic, where the fifth request message includes the identification information of the target customized container cluster management characteristic; and the network device receives a fifth response message from the CCM, where the fifth response message indicates that the CCM successfully deletes the target customized container cluster management characteristic.

According to a third aspect, a container cluster management CCM is provided, including:
a transceiver unit, and a processing unit connected to the transceiver unit.

The transceiver unit is configured to receive a first request message from a network device, where the first request is used to request the CCM to associate a target customized container cluster management characteristic with a target container cluster, and the first request message includes identification information of the target customized container cluster management characteristic and identification information of the target container cluster, where the network device is a consumer entity of the CCM.

The processing unit is configured to associate the target customized container cluster management characteristic with the target container cluster based on the first request message.

With reference to the third aspect, in some implementations of the third aspect, the first request message further includes application scope information of the association operation; and the application scope information of the association operation indicates that the target customized container cluster management characteristic is applied to all namespaces in the target container cluster; or the application scope information of the association operation indicates that the target customized container cluster management characteristic is applied to some namespaces in the target container cluster, and the first request message further includes identification information of the some namespaces.

With reference to the third aspect, in some implementations of the third aspect, the first request message further includes information about a consumer that is in the target container cluster and that uses the target customized container cluster management characteristic, and the consumer that uses the target customized container cluster management characteristic is a control plane functional entity and/or a user plane functional entity.

With reference to the third aspect, in some implementations of the third aspect, the transceiver unit is further configured to send a first response message to the network device, where the first response message indicates that the target customized container cluster management characteristic is successfully associated with the target container cluster.

With reference to the third aspect, in some implementations of the third aspect, the transceiver unit is further configured to receive a second request message from the network device, where the second request is used to request the CCM to load an object file, the second request message includes specific information, and the specific information is for determining the object file, and the object file includes configuration, status, and policy information for deploying and running the target customized container cluster management characteristic.

The processing unit is further configured to: determine the object file based on the second request message, and verify whether the object file is able to be loaded.

The processing unit is further configured to load the object file when the object file is able to be loaded.

The transceiver unit is further configured to send a second response message to the network device, where the second response message indicates that the CCM successfully loads the object file.

With reference to the third aspect, in some implementations of the third aspect, the object file is a managed container cluster object declarative descriptor MDD file; and the specific information includes identification information of the object file and/or storage path information of the object file.

With reference to the third aspect, in some implementations of the third aspect, the transceiver unit is further configured to receive a third request message from the network device, where the third request is used to request the CCM to create the target customized container cluster management characteristic, and the third request message includes the specific information.

The processing unit is further configured to determine the object file based on the third request message.

The processing unit is further configured to create a target object instance based on deployment information in the object file, where the target object instance corresponds to the target customized container cluster management characteristic.

The transceiver unit is further configured to send a third response message to the network device, where the third response message indicates that the CCM successfully creates the target customized container cluster management characteristic, and the third response message includes identification information of the target object instance.

With reference to the third aspect, in some implementations of the third aspect, the transceiver unit is further configured to receive a fourth request message from the network device, where the fourth request is used to request to disassociate the target customized container cluster management characteristic from the target container cluster, and the fourth request message includes the identification information of the target customized container cluster management characteristic and the identification information of the target container cluster.

The processing unit is further configured to disassociate the target customized container cluster management characteristic from the target container cluster based on the fourth request message.

The transceiver unit is further configured to send a fourth response message to the network device, where the fourth response message indicates that the CCM successfully disassociates the target customized container cluster management characteristic from the target container cluster.

With reference to the third aspect, in some implementations of the third aspect, the transceiver unit is further configured to receive a fifth request message from the network device, where the fifth request is used to request to delete the target customized container cluster management characteristic, where the fifth request message includes the identification information of the target customized container cluster management characteristic.

The processing unit is further configured to delete the target customized container cluster management characteristic based on the fifth request message.

The transceiver unit is further configured to send a fifth response message to the network device, where the fifth response message indicates that the CCM successfully deletes the target customized container cluster management characteristic.

According to a fourth aspect, a network device is provided, including:
a transceiver unit, and a processing unit connected to the transceiver unit.

The processing unit is configured to determine to associate a target customized container cluster management characteristic with a target container cluster.

The transceiver unit is configured to send a first request message to a container cluster management CCM, where the first request is used to request the CCM to associate the target customized container cluster management characteristic with the target container cluster, and the first request message includes identification information of the target customized container cluster management characteristic and identification information of the target container cluster.

The network device is a consumer entity of the CCM.

With reference to the fourth aspect, in some implementations of the fourth aspect, the first request message further includes application scope information of the association operation; and the application scope information of the association operation indicates that the target customized container cluster management characteristic is applied to all namespaces in the target container cluster; or the application scope information of the association operation indicates that the target customized container cluster management characteristic is applied to some namespaces in the target container cluster, and the first request message further includes identification information of the some namespaces.

With reference to the fourth aspect, in some implementations of the fourth aspect, the first request message further includes information about a consumer that is in the target container cluster and that uses the target customized container cluster management characteristic, and the consumer that uses the target customized container cluster management characteristic is a control plane functional entity and/or a user plane functional entity.

With reference to the fourth aspect, in some implementations of the fourth aspect, the transceiver unit is further configured to receive a first response message from the CCM, where the first response message indicates that the target customized container cluster management characteristic is successfully associated with the target container cluster.

With reference to the fourth aspect, in some implementations of the fourth aspect, the processing unit is further configured to determine an object file, where the object file includes configuration, status, and policy information for deploying and running the target customized container cluster management characteristic.

The transceiver unit is further configured to send a second request message to the CCM, where the second request is used to request the CCM to load the object file, the second request message includes specific information, and the specific information is for determining the object file.

The transceiver unit is further configured to receive a second response message from the CCM, where the second response message indicates that the CCM successfully loads the object file.

With reference to the fourth aspect, in some implementations of the fourth aspect, the object file is a managed container cluster object declarative descriptor MDD file; and the specific information includes identification information of the object file and/or storage path information of the object file.

With reference to the fourth aspect, in some implementations of the fourth aspect, the processing unit is further configured to determine to create the target customized container cluster management characteristic.

The transceiver unit is further configured to send a third request message to the CCM, where the third request is used to request the CCM to create the target customized container cluster management characteristic, and the third request message includes the specific information.

The transceiver unit is further configured to receive a third response message from the CCM, where the third response message indicates that the CCM successfully creates the target customized container cluster management characteristic, the third response message includes identification information of the target object instance, and the target object instance corresponds to the target customized container cluster management characteristic.

With reference to the fourth aspect, in some implementations of the fourth aspect, the processing unit is further configured to determine to disassociate the target customized container cluster management characteristic from the target container cluster.

The transceiver unit is further configured to send a fourth request message to the CCM, where the fourth request is used to request to disassociate the target customized container cluster management characteristic from the target container cluster, and the fourth request message includes the identification information of the target customized container cluster management characteristic and the identification information of the target container cluster.

The transceiver unit is further configured to receive a fourth response message from the CCM, where the fourth response message indicates that the CCM successfully disassociates the target customized container cluster management characteristic from the target container cluster.

With reference to the fourth aspect, in some implementations of the fourth aspect, the processing unit is further configured to determine to delete the target customized container cluster management characteristic.

The transceiver unit is further configured to send a fifth request message to the CCM, where the fifth request is used to request to delete the target customized container cluster management characteristic, where the fifth request message includes the identification information of the target customized container cluster management characteristic.

The transceiver unit is further configured to receive a fifth response message from the CCM, where the fifth response message indicates that the CCM successfully deletes the target customized container cluster management characteristic.

According to a fifth aspect, a communication device is provided, including a communication interface and a processor. When the communication device runs, the processor executes a computer program or instructions stored in a memory, so that the communication device performs the method in any possible implementation of the first aspect or the second aspect. The memory may be located in the processor, or may be implemented by a chip independent of the processor. This is not specifically limited in this application.

According to a sixth aspect, a computer-readable storage medium is provided, including a computer program. When the computer program is run on a computer, the computer is enabled to perform the method in any possible implementation of the first aspect or the second aspect.

According to a seventh aspect, a chip is provided. A processing circuit is disposed on the chip, and the processing circuit is configured to perform the method in any possible implementation of the first aspect or the second aspect.

According to an eighth aspect, a computer program product is provided. The computer program product includes a computer program (which may also be referred to as code or instructions). When the computer program is run, a computer is enabled to perform the method in any possible implementation of the first aspect or the second aspect.

### BRIEF DESCRIPTION OF DRAWINGS

FIG. 1 shows a system to which this application is applicable;
FIG. 2 shows a system to which this application is applicable;
FIG. 3 is a schematic flowchart of a solution according to this application;
FIG. 4 is a schematic block diagram of a communication apparatus according to this application; and
FIG. 5 is a schematic block diagram of a communication device according to this application.

### DESCRIPTION OF EMBODIMENTS

The following describes technical solutions in embodiments of this application with reference to accompanying drawings.

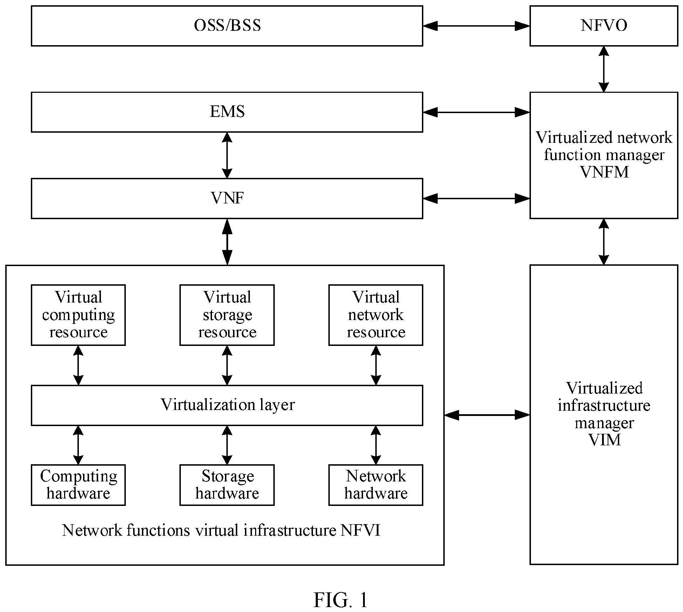

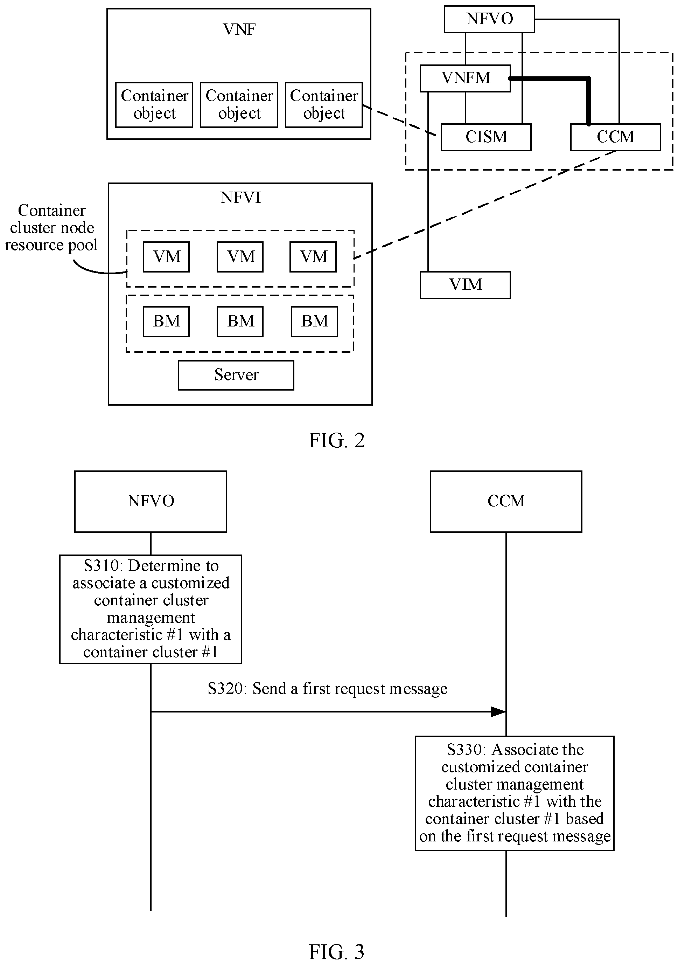

First, a system to which an embodiment of this application is applicable is described with reference to FIG. 1 and FIG. 2.

A network functions virtualization (network functions virtualization, NFV) system mainly includes the following functional entities.

Network functions virtualization orchestrator (network functions virtualization orchestrator, NFVO): The NFVO is mainly responsible for life cycle management of a network service (network service, NS), and allocation and scheduling of virtual resources in a network functions virtualization infrastructure (network functions virtualization infrastructure, NFVI). The NFVO may communicate with one or more virtualized network function managers (virtualized network function managers, VNFMs) to perform an operation related to instantiating an NS. For example, the NFVO sends corresponding configuration information to the VNFM, and requests status information of one or more virtualized network functions (virtualized network functions, VNFs) from the VNFM. In addition, the NFVO may further communicate with a virtualized infrastructure manager (virtualized infrastructure manager, VIM), to allocate and/or reserve resources in the NFVI, and exchange resource configuration, status information, and the like.

VNFM: The VNFM is mainly responsible for life cycle management of one or more VNFs, for example, instantiating (instantiating) the VNF, updating (updating) the VNF, querying the VNF, scaling (scaling) the VNF, terminating (terminating) the VNF, and the like. The VNFM may communicate with the VNF, to manage a life cycle of the VNF, exchange configuration information, status information, and the like with the VNF. It may be understood that the NFV system may include one or more VNFMs, and each VNFM separately performs life cycle management on different types of VNFs.

NFVI: The NFVI is an infrastructure of the NFV system, and includes hardware components, software components, and their combinations, to help establish a virtualization environment and deploy, manage, and implement VNF in the virtualization environment. The NFVI may include at least computing (computing) hardware, storage hardware, and network hardware. A virtualization layer of the NFVI may abstract the foregoing hardware and decouple the hardware from the VNF to obtain a corresponding virtual computing resource, virtual storage resource, and virtual network resource, so as to provide a virtualized machine (virtualized machine, VM) and a virtualized container in another form for the VNF.

VIM: The VIM is mainly configured to control and manage interaction between the VNF and the computing hardware, the storage hardware, the network hardware, the virtual computing resource, the virtual storage resource, and the virtual network resource. For example, the VIM may perform a resource management function, specifically for example, add a corresponding virtual resource to the virtualized machine or the virtualized container in another form, collect fault information of the NFVI in a system running process, and the like. In addition, the VIM may communicate with the VNFM, for example, receive a resource allocation request from the VNFM, and feed back resource configuration and status information to the VNFM.

VNF: The NFV system may include one or more VNFs (usually a plurality of VNFs), may run one or more virtualized machines or virtualized containers in another form, and corresponds to a group of network functions originally implemented by a dedicated device.

Element management system (element management system, EMS): The EMS may be configured to configure and manage the VNF, and initiate a life cycle management operation such as instantiation of a new VNF to the VNFM. It may be understood that the NFV system may include one or more EMSs.

Operations support system (operations support system, OSS) or business support system (business support system, BSS): The OSSBSS may support various end-to-end telecom services. Management functions supported by the OSS may include network configuration, service provision, fault management, and the like. The BSS may be configured to: process related services such as orders, payment, and revenue, and support functions such as product management, order management, revenue management, and customer management. It should be noted that the OSSBSS may be used as a service requester to request the NFVO to instantiate the NS, and the OSSBSS or a computing device on which the OSSBSS depends usually may be correspondingly referred to as the service requester.

It may be understood that in the NFV system shown in FIG. 1, the foregoing functional entities may be deployed in different computing devices, or some functional entities may be integrated into a same computing device. This is not limited.

In addition, telecom network transformation is experiencing an evolution from NFV to cloud-native (cloud-native). Cloud-native is a new system implementation paradigm for building, running, and managing software in a cloud environment. The cloud-native makes full use of cloud infrastructure and platform services, adapts to the cloud environment, and has architectural practices with key characteristics such as (micro) service orientation, scalability, distribution, high availability, multi-tenancy, and automation. In this transformation, the introduction of container management into an NFV management and orchestration (management and orchestration, MANO) reference architecture is a key part of practices of the NFV evolving to the cloud-native. Therefore, as shown in FIG. 2, the following two new logical functions are introduced into an NFV MANO system.

Container infrastructure service management (container infrastructure service management, CISM): The CISM is also referred to as CaaS management. An open-source prototype of the CISM is Kubemetes. The CISM is responsible for managing container objects invoked by a containerized VNF, including creating, updating, and deleting container objects, and scheduling container objects to corresponding node resources in a container cluster node resource pool managed by the CISM. The CISM is also responsible for managing container infrastructure service (container infrastructure service, CIS) instances in a container user-plane process.

Container cluster management (CIS Cluster Management, CCM): The CCM is also referred to as CIS cluster management. The CCM is responsible for managing a container cluster, including creating a node resource pool used by the container cluster and scaling nodes, for example, allocating a new virtualized machine or bare-metal machine (bare-metal machine, BM) in a specified container cluster node resource pool.

It should be understood that both the CISM and the CCM are independent logical functions. In a function deployment process, the CCM and the CISM may be disposed in different physical entities, for example, the CISM is deployed in the VNFM, and the CCM is deployed in the VIM; or the CCM and the CISM may be co-located in a same physical entity, for example, both are deployed in the VNFM.

Currently, a container cluster management characteristic is deployed in the container cluster in a static configuration manner. For example, in a process of creating a container cluster, a predefined container cluster management characteristic may be added to the container cluster, and in a process of deleting a container cluster, a container cluster management characteristic used by the container cluster is deleted accordingly, so that tight coupling between the container cluster management characteristic and the container cluster is implemented. However, deploying the container cluster management characteristic in the static configuration manner cannot meet carriers' requirements, especially in an environment in which the container cluster is applied to multi-tenant management environment. Carriers are in urgent need of having a method for dynamically deploying the container cluster management characteristic in the container cluster based on carriers' operation management requirements.

Based on this, this application provides a communication method 300, as shown in FIG. 3, to implement dynamic deployment of a container cluster management characteristic. The method 300 is applicable to the system shown in FIG. 1 and FIG. 2. For ease of description, an example in which a consumer entity of a CCM is an NFVO is used below for description. The method 300 includes the following steps.

S310: The NFVO determines to associate a customized container cluster management characteristic #1 (an example of a target customized container cluster management characteristic) with a container cluster #1 (an example of a target container cluster).

In a possible case, the NFVO may determine, based on a requirement (for example, based on a carriers' policy of deploying the container cluster), to associate the customized container cluster management characteristic #1 with the container cluster #1.

For example, at the beginning, the carriers' policy of deploying the container cluster #1 is that the container cluster #1 is not associated with the customized container cluster management characteristic #1. Subsequently, the carriers' policy for the container cluster #1 is adjusted to associate the container cluster #1 with the customized container cluster management characteristic #1. In this case, the NFVO may determine to associate the customized container cluster management characteristic #1 with the container cluster #1 based on the adjusted policy for the container cluster #1.

The following is an example of the customized container cluster management characteristic #1.

### Example 1

The customized container cluster management characteristic #1 may be a container cluster enhanced characteristic (CIS cluster enhanced characteristics, CCEC), and an open source community prototype of the characteristic is a Kubernetes custom resource definition (custom resource definition, CRD). To meet a new requirement for deploying a containerized VNF or operating an additional container cluster function of the container cluster (for example, an auxiliary container network for a virtualized environment), the container cluster may support addition of a new enhanced characteristic function to a characteristic capability set of a baseline of the container cluster. The container cluster enhanced characteristic CCEC may be applied to the container cluster to implement an advanced characteristic and operation in the container cluster. For example, the container cluster enhanced characteristic (a characteristic of selecting an appropriate container network interface (container network interface, CNI) plug-in in a container cluster network for auxiliary) is added to a CISM instance to enhance a northbound application programming interface (application programming interface, API) of the CISM.

### Example 2

The customized container cluster management characteristic #1 may be a daemon workload (daemon workload), also referred to as a daemon object. An open source community prototype of the characteristic is a Kubernetes daemon set. The Kubernetes daemon set loads daemons for a specific purpose (for example, collecting logs or monitoring a status) to a CIS cluster node to monitor a running status of the CIS cluster node. The daemon load is configured to deploy customized container cluster management characteristics with a same function to all applicable container cluster nodes. The following is an example of using the daemon workload. A managed container cluster object (managed CIS cluster object, MCCO) instance is run on each container cluster node to collect logs, an MCCO instance is run on each container cluster node to monitor a status of the node, and an MCCO instance is run on each container cluster node to dynamically configure routing information. The CISM instance uses the daemon workload to simultaneously control a group of daemons across different container clusters.

It should be understood that the customized container cluster management characteristic #1 may alternatively be another example. This is not limited in this application. The customized container cluster management characteristic may be a specific process (for example, a specific binary process).

S320: The NFVO sends a first request message to the CCM, where the first request is used to request to associate the customized container cluster management characteristic #1 with the container cluster #1. Correspondingly, the CCM receives the first request message.

The first request message includes identification information of the customized container cluster management characteristic #1 and identification information of the container cluster #1.

Optionally, the first request message may further include one or more of the following:
application scope information of the association operation and information about a consumer that uses the customized container cluster management characteristic #1 in the container cluster #1.

For example, the application scope information of the association operation may indicate that the customized container cluster management characteristic #1 is associated with all namespaces in the container cluster #1.

For another example, the application scope information of the association operation may indicate that the customized container cluster management characteristic #1 is associated with some namespaces in the container cluster #1. In this case, the first request message further includes identification information of the some namespaces.

The consumer that uses the customized container cluster management characteristic #1 may be a functional entity in the container cluster #1. For example, the functional entity may be a control plane functional entity (for example, a CISM entity) in the container cluster #1. For another example, the functional entity may be a user plane functional entity (for example, a CIS entity) in the container cluster #1. For still another example, the functional entity may be the control plane functional entity and the user plane functional entity in the container cluster #1.

S330: The CCM associates the customized container cluster management characteristic #1 with the container cluster #1 based on the first request message.

In a possible manner, the CCM may create a list (denoted as a list #1) of customized container cluster management characteristics associated with the container cluster #1, and the CCM may add the identification information of the customized container cluster management characteristic #1 to the list #1, so that the customized container cluster management characteristic #1 is associated with the container cluster #1.

Optionally, the CCM may further configure, based on the first request message, a type of the consumer that uses the customized container cluster management characteristic #1 in the container cluster #1.

For example, the CCM may use the customized container cluster management characteristic #1 to configure the control plane functional entity in the container cluster #1.

For another example, the CCM may use the customized container cluster management characteristic #1 to configure the user plane functional entity in the container cluster #1.

For still another example, the CCM may use the customized container cluster management characteristic #1 to configure both the control plane functional entity and the user plane functional entity in the container cluster #1.

Optionally, before the CCM associates the customized container cluster management characteristic #1 with the container cluster #1, the CCM may further send a request message #A to the NFVO, where the request message #A is used to request the NFVO to allow allocating an infrastructure resource (denoted as an infrastructure resource #1) for deploying the customized container cluster management characteristic #1 in the container cluster #1. For example, the infrastructure resource #1 may be a virtualized machine resource or a bare machine resource. In one case, the NFVO may send a response message #A to the CCM, where the response message #A indicates that the infrastructure resource #1 is allowed to be allocated in the container cluster #1. Further, the CCM sends a request message #B to a VIM, where the request message #B requests to allocate the infrastructure resource #1 to the customized container cluster management characteristic #1 in the container cluster #1. The VIM allocates a corresponding infrastructure resource #1 in the container cluster #1 based on the request message #B. The process is similar to a resource management granting (granting) process of a VNF life cycle management (life cycle management, LCM) operation.

According to the solution of this application, the CCM may receive the first request message from the NFVO, and associate the customized container cluster management characteristic #1 with the container cluster #1 based on the first request message. In this way, the dynamic deployment of the container cluster management characteristic is implemented, and carriers' requirements are better met. In addition, in the solution for implementing the dynamic deployment of the container cluster management characteristic in this application, interaction between the CCM and the CISM does not need to be performed, so that an increase in integration costs of interoperation between functions of a container platform layer in a multi-vendor environment can be avoided.

Optionally, in S340, the CCM sends a first response message to the NFVO, where the first response message indicates that the customized container cluster management characteristic #1 is successfully associated with the container cluster #1.

Optionally, before S310, the method 300 further includes S301 to S309.

S301: The NFVO determines a file #1 (an example object file).

The file #1 is a template file that contains configuration, status, and policy information for deploying and running the customized container cluster management characteristic #1.

For an example, the file #1 is a managed container cluster object (managed CIS cluster object, MCCO) declarative descriptor (MCCO declarative descriptor, MDD) file. The MCCO is an abstract NFV object used in a container cluster management process, and a characteristic of the MCCO is represented as configuration, a status, requested and allocated infrastructure resources of the object, and an applicable operation policy. Based on applicability and a functional scope of the MCCO object, the MCCO may represent a managed object in the following scenarios: a group of associated containers running on a container user plane CIS instance, or a configuration object in a container management plane CISM instance.

The CCM is responsible for life cycle management of the MCCO, for example, by requesting the CISM to, by using a daemon workload object, create and deploy the MCCO, install the MCCO into the container cluster, remove the MCCO from the container cluster, and the like. In addition, because the MCCO instance consumes computing, network, and/or storage resources of a CIS cluster, the CCM is also responsible for requesting the NFVO to allow deploying resources required by the MCCO instance. The CCM is responsible for:
(a) enhancing or adding a group of container cluster management characteristics; and
(b) supporting the container cluster management process, for example, container cluster deployment implementation or assurance.

The MDD is a template file that describes basic features of the MCCO. For example, an expected status of the MCCO is included in the file. The MDD file may be implemented by using a native descriptor (native descriptor) template file used by an open source community. Specifically, the file #1 includes one or more pieces of the following information:
computing resource, storage resource, and network resource information required for deploying the customized container cluster management characteristic #1, role based access control (role based access control, RBAC) information of a security authentication mechanism that deploys accessing the customized container cluster management characteristic #1, and information about a cloud provider controller (cloud provider controller) that monitors running of the customized container cluster management characteristic #1.

In a possible case, the carrier may configure the file #1 for the NFVO. Further, the NFVO may store the file #1 in corresponding storage space.

S302: The NFVO sends a second request message to the CCM, where the second request is used to request the CCM to load the file #1, and the second request message includes information #A for determining the file #1.

For example, the information #A includes identification information of the file #1.

For another example, the information #A includes access path information of the file #1.

S303: The CCM determines the file #1 based on the information #A, and verifies whether the file #1 is able to be loaded.

For example, the CCM may verify an authentication mechanism of the file #1, for example, integrity, authenticity, validity, and usability of the file #1 in the container cluster. The CCM may further verify whether a coerciveness attribute in the file #1 is ready.

In a possible case, if the integrity, and/or authenticity, and/or validity, and/or usability, and/or coerciveness of the file #1 in the container cluster satisfy a preset condition, the file #1 is able to be loaded.

S304: When the file #1 is able to be loaded, the CCM loads (onboard) the file #1.

In a possible case, the CCM may store the file #1 in the corresponding storage space, where the storage space may be local storage space of the CCM, or may be storage space of another device. It should be understood that the CCM has permission to access the storage space.

It should be understood that, when the file #1 is not able to be loaded, the CCM does not load the file #1.

Optionally, in S305, the CCM sends a second response message to the NFVO, where the second response message indicates whether the CCM successfully loads the file #1.

It should be understood that S301 to S305 may alternatively exist independently. In other words, other steps in this application may not be included after S301 to S305.

S306: The NFVO determines that the customized container cluster management characteristic #1 needs to be created.

In a possible case, the NFVO may determine, based on a requirement (for example, based on the carriers' policy of deploying the container cluster), that the customized container cluster management characteristic #1 needs to be created.

S307: The NFVO sends a third request message to the CCM, where the third request is used to request to create the customized container cluster management characteristic #1. Correspondingly, the CCM receives the third request message.

The third request message includes the identification information of the file #1.

S308: The CCM creates the customized container cluster management characteristic #1 based on the third request message.

Specifically, the CCM may access the file #1 based on the identification information of the file #1 in the third request message, parse deployment information of an object instance #1 in the file #1, and create the object instance #1 based on the deployment information of the object instance #1. This object instance #1 corresponds to the customized container cluster management characteristic #1. In other words, the object instance #1 is an abstract representation form of the customized container cluster management characteristic #1.

For example, the object instance #1 may be a managed container cluster object (managed CIS cluster object, MCCO) instance #1.

Optionally, in S309, the CCM sends a third response message to the NFVO, where the third response message indicates that the CCM successfully creates the customized container cluster management characteristic #1.

The third response message includes identification information of the object instance #1 (for example, an MCCO instance #1).

It should be understood that S306 to S309 may alternatively exist independently. In other words, other steps in this application may not be included before or after S306 to S309.

Optionally, after S340, the method 300 further includes S341 to S344.

S341: The NFVO determines to disassociate the customized container cluster management characteristic #1 from the container cluster #1.

In a possible case, the NFVO may determine, based on the requirement (for example, based on the carriers' policy of deploying the container cluster), to disassociate the customized container cluster management characteristic #1 from the container cluster #1.

It should be understood that "disassociating" means to remove an association relationship.

S342: The NFVO sends a fourth request message to the CCM, where the fourth request is used to request the CCM to disassociate the customized container cluster management characteristic #1 from the container cluster #1. Correspondingly, the CCM receives the fourth request message.

The fourth request message includes the identification information of the customized container cluster management characteristic #1 and the identification information of the container cluster #1.

S343: The CCM disassociates the customized container cluster management characteristic #1 from the container cluster #1 based on the fourth request message.

In an optional manner, the CCM may delete the identification information of the customized container cluster management characteristic #1 from the foregoing list #1.

According to the solution of this application, the CCM may receive the fourth request message from the NFVO, and complete disassociation between the customized container cluster management characteristic #1 and the container cluster #1 based on the fourth request message. In comparison, in the solution of this application, the customized container cluster management characteristic can be dynamically disassociated from the container cluster without a deletion process of the container cluster, so that carriers' changing container cluster management requirements are better met.

Optionally, in S344, the CCM sends a fourth response message to the NFVO, where the fourth response message indicates that the CCM successfully disassociates the customized container cluster management characteristic #1 from the container cluster #1.

It should be understood that S341 to S344 may alternatively exist independently. For example, S341 to S344 are not performed based on S310 to S340. In other words, before disassociating the customized management characteristic #1 from the container cluster #1, the CCM may not perform S310 to S340 to dynamically associate the customized management characteristic #1 with the container cluster #1.

Optionally, after S344, the method 300 further includes S345 to S348.

S345: The NFVO determines to delete the customized container cluster management characteristic #1.

In a possible case, the NFVO may determine, based on the requirement (for example, based on the policy of deploying the container cluster by the carrier), to delete the customized container cluster management characteristic #1.

S346: The NFVO sends a fifth request message to the CCM, where the fifth request is used to request to delete the customized container cluster management characteristic #1. Correspondingly, the CCM receives the fifth request message.

The fifth request message includes the identification information of the customized container cluster management characteristic #1.

S347: The CCM deletes the customized container cluster management characteristic #1 based on the fifth request message.

It should be understood that if S347 is performed based on S343. In other words, when S347 is performed, no container cluster using the customized container cluster management characteristic #1 exists. In this case, the customized container cluster management characteristic #1 may be directly deleted.

In another case, if S347 is not performed based on S343, the CCM needs to determine whether the container cluster using the customized container cluster management characteristic #1 exists. For example, the CCM determines that the container cluster #1 is using the customized container cluster management characteristic #1. In this case, the CCM may first disassociate the customized container cluster management characteristic #1 from the container cluster #1, and then delete the customized container cluster management characteristic #1.

Optionally, in S348, the CCM sends a fifth response message to the NFVO, where the fifth response message indicates that the CCM successfully deletes the customized container cluster management characteristic #1.

It should be understood that S345 to S348 may alternatively exist independently. For example, S345 to S348 are not performed based on S310 to S340. In other words, before deleting the customized management characteristic #1, the CCM may not perform S310 to S340 to dynamically associate the customized management characteristic #1 with the container cluster #1.

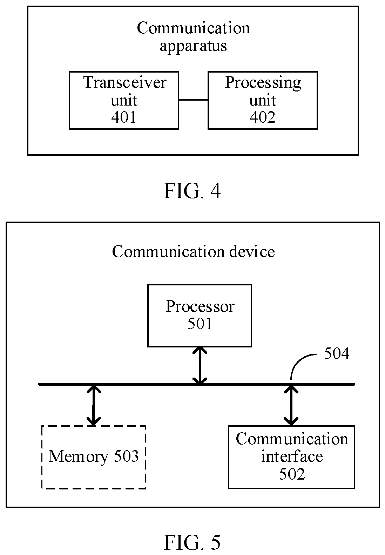

According to the foregoing method, FIG. 4 shows a communication apparatus according to an embodiment of this application. The communication apparatus includes a transceiver unit 401 and a processing unit 402.

The transceiver unit 401 may be configured to implement a corresponding communication function. The transceiver unit 401 may also be referred to as a communication interface or a communication unit. The processing unit 402 may be configured to perform a processing operation.

Optionally, the apparatus further includes a storage unit, where the storage unit may be configured to store instructions and/or data. The processing unit 402 may read the instructions and/or data in the storage unit, so that the apparatus implements the actions of the apparatus in the foregoing method embodiments.

In a first design, the apparatus may be the CCM in the foregoing embodiments, or may be a component (such as a chip) of the CCM.

The transceiver unit is configured to receive a first request message from a network device, where the first request is used to request the CCM to associate a target customized container cluster management characteristic with a target container cluster; and the processing unit is configured to associate the target customized container cluster management characteristic with the target container cluster based on the first request message.

In one case, the transceiver unit is further configured to send a first response message to the network device, where the first response message indicates that the target customized container cluster management characteristic is successfully associated with the target container cluster.

In another case, the transceiver unit is further configured to receive a second request message from the network device, where the second request is used to request the CCM to load an object file. The processing unit is further configured to: determine the object file based on the second request message, and verify whether the object file is able to be loaded; the processing unit is further configured to load the object file when the object file is able to be loaded. The transceiver unit is further configured to send a second response message to the network device, where the second response message indicates that the CCM successfully loads the object file.

In another case, the transceiver unit is further configured to receive a third request message from the network device, where the third request is used to request the CCM to create the target customized container cluster management characteristic. The processing unit is further configured to determine an object file based on the third request message. The processing unit is further configured to create a target object instance based on deployment information in the object file. The transceiver unit is further configured to send a third response message to the network device, where the third response message indicates that the CCM successfully creates the target customized container cluster management characteristic, and the third response message includes identification information of the target object instance.

In another case, the transceiver unit is further configured to receive a fourth request message from the network device, where the fourth request is used to request to disassociate the target customized container cluster management characteristic from the target container cluster. The processing unit is further configured to disassociate the target customized container cluster management characteristic from the target container cluster based on the fourth request message. The transceiver unit is further configured to send a fourth response message to the network device, where the fourth response message indicates that the CCM successfully disassociates the target customized container cluster management characteristic from the target container cluster.

In another case, the transceiver unit is further configured to receive a fifth request message from the network device, where the fifth request is used to request to delete the target customized container cluster management characteristic. The processing unit is further configured to delete the target customized container cluster management characteristic based on the fifth request message. The transceiver unit is further configured to send a fifth response message to the network device, where the fifth response message indicates that the CCM successfully deletes the target customized container cluster management characteristic.

In a second design, the apparatus may be the NFVO in the foregoing embodiments, or may be a component (such as a chip) of the NFVO.

The processing unit is configured to determine to associate a target customized container cluster management characteristic with a target container cluster. The transceiver unit is configured to send a first request message to a container cluster management CCM, where the first request is used to request the CCM to associate the target customized container cluster management characteristic with the target container cluster.

In one case, the processing unit is further configured to determine an object file. The transceiver unit is further configured to send a second request message to the CCM, where the second request is used to request the CCM to load the object file. The transceiver unit is further configured to receive a second response message from the CCM, where the second response message indicates that the CCM successfully loads the object file.

In another case, the processing unit is further configured to determine to create the target customized container cluster management characteristic. The transceiver unit is further configured to send a third request message to the CCM, where the third request is used to request the CCM to create the target customized container cluster management characteristic. The transceiver unit is further configured to receive a third response message from the CCM, where the third response message indicates that the CCM successfully creates the target customized container cluster management characteristic.

In another case, the processing unit is further configured to determine to disassociate the target customized container cluster management characteristic from the target container cluster. The transceiver unit is further configured to send a fourth request message to the CCM, where the fourth request is used to request to disassociate the target customized container cluster management characteristic from the target container cluster. The transceiver unit is further configured to receive a fourth response message from the CCM, where the fourth response message indicates that the CCM successfully disassociates the target customized container cluster management characteristic from the target container cluster.

In another case, the processing unit is further configured to determine to delete the target customized container cluster management characteristic. The transceiver unit is further configured to send a fifth request message to the CCM, where the fifth request is used to request to delete the target customized container cluster management characteristic. The transceiver unit is further configured to receive a fifth response message from the CCM, where the fifth response message indicates that the CCM successfully deletes the target customized container cluster management characteristic.

It should be understood that a specific process in which the units perform the foregoing corresponding steps has been described in detail in the foregoing method embodiments. For brevity, details are not described herein again.

It should also be understood that the apparatus herein is embodied in a form of a functional unit. The term "unit" herein may refer to an application-specific integrated circuit (application-specific integrated circuit, ASIC), an electronic circuit, a processor (for example, a shared processor, a proprietary processor, or a group processor) and a memory that are configured to execute one or more software or firmware programs, a merge logic circuit, and/or another suitable component that supports the described functions. In an optional example, a person skilled in the art may understand that the apparatus may be specifically the first network element in the foregoing embodiments, and may be configured to perform procedures and/or steps corresponding to the first network element in the foregoing method embodiments. Alternatively, the apparatus may be specifically the network management network element in the foregoing embodiments, and may be configured to perform procedures and/or steps corresponding to the network management network element in the foregoing method embodiments. To avoid repetition, details are not described herein again.

The communication apparatus has functions of implementing corresponding steps performed by the apparatus in the foregoing method. The functions may be implemented by using hardware, or may be implemented by executing corresponding software by hardware. The hardware or the software includes one or more modules corresponding to the foregoing functions. For example, the transceiver unit may be replaced by a transceiver (where for example, a sending unit in the transceiver unit may be replaced by a transmitter, and a receiving unit in the transceiver unit may be replaced by a receiver), and another unit, such as the processing unit, may be replaced by a processor, to separately perform a sending and receiving operation and a related processing operation in each method embodiment.

In addition, the transceiver unit 401 may be a transceiver circuit (for example, may include a receiving circuit and a sending circuit), and the processing unit may be a processing circuit.

It should be noted that the apparatus in FIG. 4 may be the apparatus in the foregoing method embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

An embodiment of this application further provides a communication device. As shown in FIG. 5, the communication device includes a processor 501 and a communication interface 502. The processor 501 is configured to execute a computer program or instructions stored in a memory 503, or read data stored in the memory 503, to perform the methods in the foregoing method embodiments. Optionally, there are one or more processors 501. The communication interface 502 is configured to receive and/or send a signal. For example, the processor 501 is configured to control the communication interface 502 to receive and/or send the signal.

Optionally, as shown in FIG. 5, the communication device further includes the memory 503, and the memory 503 is configured to store the computer program or the instructions and/or the data. The memory 503 may be integrated with the processor 501, or may be disposed separately. Optionally, there are one or more memories 503.

Optionally, the processor 501, the communication interface 502, and the memory 503 are connected to each other through a bus 504. The bus 504 may be a peripheral component interconnect (peripheral component interconnect, PCI) bus, an extended industry standard architecture (extended industry standard architecture, EISA) bus, or the like. The bus 504 may be classified into an address bus, a data bus, a control bus, and the like. For ease of representation, only one thick line is used in FIG. 5 for representation, but it does not indicate that there is only one bus or only one type of bus.

In a solution, the communication device is configured to implement operations performed by the CCM or the NFVO in the foregoing method embodiments.

For example, the processor 501 is configured to execute the computer program or the instructions stored in the memory 503, to implement related operations of the CCM in the foregoing method embodiments.

For another example, the processor 501 is configured to execute the computer program or the instructions stored in the memory 503, to implement related operations of the NFVO in the foregoing method embodiments.

It should be understood that the processor (such as the processor 501) mentioned in this embodiment of this application may be a central processing unit (central processing unit, CPU), a network processor (network processor, NP), or a combination of the CPU and the NP. The processor may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic logic array, GAL), or any combination thereof.

It should be further understood that the memory (for example, the memory 503) mentioned in this embodiment of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

A person skilled in the art should easily be aware that units and algorithm steps in the examples described with reference to embodiments disclosed in this specification can be implemented by electronic hardware or a combination of computer software and electronic hardware. Whether the functions are executed in a manner of hardware or software depends on specific applications and design constraint conditions of the technical solutions. A person skilled in the art may use different methods to implement the described functions for each specific application. However, it should not be considered that the implementation goes beyond the scope of embodiments of this application.

A person skilled in the art may clearly understand that, for a purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed systems, apparatuses, and methods may be implemented in other manners. For example, the described apparatus embodiment is merely schematic. For example, the division into the units is merely logical function division. In actual application, there may be another division manner. For example, a plurality of units or components may be combined or integrated into another system, or some characteristics may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on an actual requirement to achieve an objective of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to current technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit a protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a container cluster management CCM, a first request message from a network device, wherein the first request message is used to request the CCM to associate a target customized container cluster management characteristic with a target container cluster, and the first request message comprises identification information of the target customized container cluster management characteristic and identification information of the target container cluster, wherein
the network device is a consumer entity of the CCM; and
associating, by the CCM, the target customized container cluster management characteristic with the target container cluster based on the first request message.

2. The method according to claim 1, wherein
the first request message further comprises application scope information of the association operation; and
the application scope information of the association operation indicates that the target customized container cluster management characteristic is applied to all namespaces in the target container cluster; or
the application scope information of the association operation indicates that the target customized container cluster management characteristic is applied to some namespaces in the target container cluster, and the first request message further comprises identification information of the some namespaces.

3. The method according to claim 1 or 2, wherein
the first request message further comprises information about a consumer that is in the target container cluster and that uses the target customized container cluster management characteristic, and the consumer that uses the target customized container cluster management characteristic is a control plane functional entity and/or a user plane functional entity.

4. The method according to any one of claims 1 to 3, wherein
the method further comprises:
sending, by the CCM, a first response message to the network device, wherein the first response message indicates that the target customized container cluster management characteristic is successfully associated with the target container cluster.

5. The method according to any one of claims 1 to 4, wherein
before the receiving, by a CCM, a first request message from a network device, the method further comprises:
receiving, by the CCM, a second request message from the network device, wherein the second request is used to request the CCM to load an object file, the second request message comprises specific information, and the specific information is for determining the object file, wherein
the object file comprises configuration, status, and policy information for deploying and running the target customized container cluster management characteristic;
determining, by the CCM, the object file based on the second request message, and verifying whether the object file is able to be loaded;
loading, by the CCM, the object file when the object file is able to be loaded; and
sending, by the CCM, a second response message to the network device, wherein the second response message indicates that the CCM successfully loads the object file.

6. The method according to claim 5, wherein
the object file is a managed container cluster object declarative descriptor MDD file; and
the specific information comprises identification information of the object file and/or storage path information of the object file.

7. The method according to claim 5 or 6, wherein
after the loading, by the CCM, the object file, the method further comprises:
receiving, by the CCM, a third request message from the network device, wherein the third request is used to request the CCM to create the target customized container cluster management characteristic, and the third request message comprises the specific information;
determining, by the CCM, the object file based on the third request message;
creating, by the CCM, a target object instance based on deployment information in the object file, wherein the target object instance corresponds to the target customized container cluster management characteristic; and
sending, by the CCM, a third response message to the network device, wherein the third response message indicates that the CCM successfully creates the target customized container cluster management characteristic, and the third response message comprises identification information of the target object instance.

8. The method according to any one of claims 1 to 7, wherein
after the associating, by the CCM, the target customized container cluster management characteristic with the target container cluster, the method further comprises:
receiving, by the CCM, a fourth request message from the network device, wherein the fourth request is used to request to disassociate the target customized container cluster management characteristic from the target container cluster, wherein
the fourth request message comprises the identification information of the target customized container cluster management characteristic and the identification information of the target container cluster;
disassociating, by the CCM, the target customized container cluster management characteristic from the target container cluster based on the fourth request message; and
sending, by the CCM, a fourth response message to the network device, wherein the fourth response message indicates that the CCM successfully disassociates the target customized container cluster management characteristic from the target container cluster.

9. The method according to claim 8, wherein
after the disassociating, by the CCM, the target customized container cluster management characteristic from the target container cluster, the method further comprises:
receiving, by the CCM, a fifth request message from the network device, wherein the fifth request is used to request to delete the target customized container cluster management characteristic, wherein
the fifth request message comprises the identification information of the target customized container cluster management characteristic;
deleting, by the CCM, the target customized container cluster management characteristic based on the fifth request message; and
sending, by the CCM, a fifth response message to the network device, wherein the fifth response message indicates that the CCM successfully deletes the target customized container cluster management characteristic.

10. The method according to any one of claims 1 to 9, wherein
the network device is a network functions virtualization orchestrator NFVO.

11. A communication method, comprising:
determining, by a network device, to associate a target customized container cluster management characteristic with a target container cluster; and
sending, by the network device, a first request message to a container cluster management CCM, wherein the first request is used to request the CCM to associate the target customized container cluster management characteristic with the target container cluster, and the first request message comprises identification information of the target customized container cluster management characteristic and identification information of the target container cluster, wherein
the network device is a consumer entity of the CCM.

12. The method according to claim 11, wherein
the first request message further comprises application scope information of the association operation; and
the application scope information of the association operation indicates that the target customized container cluster management characteristic is applied to all namespaces in the target container cluster; or
the application scope information of the association operation indicates that the target customized container cluster management characteristic is applied to some namespaces in the target container cluster, and the first request message further comprises identification information of the some namespaces.

13. The method according to claim 11 or 12, wherein
the first request message further comprises information about a consumer that is in the target container cluster and that uses the target customized container cluster management characteristic, and the consumer that uses the target customized container cluster management characteristic is a control plane functional entity and/or a user plane functional entity.

14. The method according to any one of claims 11 to 13, wherein
the method further comprises:
receiving, by the network device, a first response message from the CCM, wherein the first response message indicates that the target customized container cluster management characteristic is successfully associated with the target container cluster.

15. The method according to any one of claims 11 to 14, wherein
the method further comprises:
determining, by the network device, an object file, wherein the object file comprises configuration, status, and policy information for deploying and running the target customized container cluster management characteristic;
sending, by the network device, a second request message to the CCM, wherein the second request is used to request the CCM to load the object file, the second request message comprises specific information, and the specific information is for determining the object file; and
receiving, by the network device, a second response message from the CCM, wherein the second response message indicates that the CCM successfully loads the object file.

16. The method according to claim 15, wherein
the object file is a managed container cluster object declarative descriptor MDD file; and
the specific information comprises identification information of the object file and/or storage path information of the object file.

17. The method according to claim 15 or 16, wherein
the method further comprises:
determining, by the network device, to create the target customized container cluster management characteristic;
sending, by the network device, a third request message to the CCM, wherein the third request is used to request the CCM to create the target customized container cluster management characteristic, and the third request message comprises the specific information; and
receiving, by the network device, a third response message from the CCM, wherein the third response message indicates that the CCM successfully creates the target customized container cluster management characteristic, the third response message comprises identification information of the target object instance, and the target object instance corresponds to the target customized container cluster management characteristic.

18. The method according to any one of claims 11 to 17, wherein
the method further comprises:
determining, by the network device, to disassociate the target customized container cluster management characteristic from the target container cluster;
sending, by the network device, a fourth request message to the CCM, wherein the fourth request is used to request to disassociate the target customized container cluster management characteristic from the target container cluster, wherein
the fourth request message comprises the identification information of the target customized container cluster management characteristic and the identification information of the target container cluster; and
receiving, by the network device, a fourth response message from the CCM, wherein the fourth response message indicates that the CCM successfully disassociates the target customized container cluster management characteristic from the target container cluster.

19. The method according to claim 18, wherein
determining, by the network device, to delete the target customized container cluster management characteristic;
sending, by the network device, a fifth request message to the CCM, wherein the fifth request is used to request to delete the target customized container cluster management characteristic, wherein
the fifth request message comprises the identification information of the target customized container cluster management characteristic; and
receiving, by the network device, a fifth response message from the CCM, wherein the fifth response message indicates that the CCM successfully deletes the target customized container cluster management characteristic.

20. The method according to any one of claims 11 to 19, wherein
the network device is a network functions virtualization orchestrator NFVO.

21. A communication apparatus, comprising a unit configured to perform the method according to any one of claims 1 to 20.

22. A communication device, comprising a communication interface and a processor, wherein the processor is configured to execute a computer program or instructions, so that the communication device performs the method according to any one of claims 1 to 20.

23. A computer-readable storage medium, comprising a computer program or instructions, wherein when the computer program or the instructions are run on a computer, the computer is enabled to perform the method according to any one of claims 1 to 20.

24. A computer program product, comprising instructions, wherein when the instructions are run on a computer, the computer is enabled to perform the method according to any one of claims 1 to 20.
